(19) **Europäisches Patentamt**
**European Patent Office**
**Office européen des brevets**

(11) **EP 2 902 950 A1**

(12) **EUROPEAN PATENT APPLICATION**

(43) Date of publication:
**05.08.2015 Bulletin 2015/32**

(51) Int Cl.:
**G06Q 10/06** *(2012.01)*    **G06Q 50/14** *(2012.01)*

(21) Application number: **14153720.9**

(22) Date of filing: **03.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
  • **Canis, Laure**
    **06000 Nice (FR)**

  • **Le Marier, Mathieu**
    **06600 Antibes (FR)**
  • **Hirel, Nicolas**
    **06410 Biot (FR)**
  • **Andrevon, Thibaud**
    **06220 Vallauris (FR)**

(74) Representative: **Lopez, Frédérique et al**
**Marks & Clerk France**
**Immeuble Visium**
**22 Avenue Aristide Briand**
**94117 Arcueil Cedex (FR)**

(54) **Method, system and computer program product of determining a payment strategy**

(57)    A computer-implemented method for handling a payment strategy for a merchant payment platform is described. The method is based on an objective criterion for providing recommendations to a user for choosing a payment strategy to be deployed over a merchant payment platform. In some embodiments, the method includes receiving a plurality of financial parameters and payment parameters, the payment parameters comprising one or more payment alternatives and one or more payment rules; simulating payment transactions for a plurality of combinations of the payment parameters, payment alternatives and payment rules; using the financial parameters for computing a plurality of financial impacts for each simulated payment transactions; and providing payment strategy recommendations based on the computed results.

200

| |
|---|
| Payment Categories & Alternatives, Rules Generation 202 |
| Set of simulated transactions 204 |
| Rules results Computation 206 |
| Financial inputs Acquisition 208 |
| NPV Computation 210 |
| Optimized Solution Generation 212 |

**FIG.2**

EP 2 902 950 A1

**Description**

**Technical Field**

The present invention is in the field of airline payment, and relates more particularly to a method, system and computer program product of determining a payment strategy.

**Background of the Invention**

Today, airline merchants have to deal with the steady increase in electronic payments, the wide range of payment methods (card, e-Wallet, bank transfer ...), not to mention the large number of sales channels. This implies integrating different and complex types of solutions to validate airline payments, combat fraud and enable fund collection, all of this within the regulations and standards across a complex and fragmented payment industry. Payment platforms offer a full suite of solutions for airline payment processing, helping merchants improve conversion rate, ensure revenue protection, and reduce costs. Payment platform servers provide travel agencies and travel industry companies the computing environment for processing all the airline payment services. The payment services generally cover payment fraud screening to detect risks of fraud associated to a payment request, payment authorization to check if customer has enough funds to purchase a trip and block funds when necessary, payment capture to send orders to transfer money from customer account to travel company account, and further additional services like IVR (Interactive Voice Response), payment statistics, and so. The airline merchants are not necessarily experts in the field of payment and determining which payment platform to meet the overall requirements of payment services is a complex operation. The airline merchants have to make decisions for selecting payment parameters among which at least the means of payment (MOP) to accept, the third party partners payment system processors (PSP), the payment acquirers (Bank) and fraud management strategy to adopt (Acceptance). Today, these decisions which are mainly based on experience or on commercial relations criteria lead to implement payment platforms that do not necessarily match each airline merchant overall operating mode, mainly lacking a robust evaluation of the financial impacts of each potential alternative.

So, there is a need for a method encompassing all the payment parameters to select the combination of parameters providing an optimized payment platform dedicated to an airline merchant environment. The present invention offers such solution.

**Summary of the invention**

Therefore, it is an object of the present invention to provide a computer-implemented method of handling a payment strategy for an airline payment platform, which is based on objective criterion for providing recommendations to a user for choosing a payment strategy to be deployed over the payment platform.

In some embodiments, the method includes receiving a plurality of financial parameters and payment parameters, the payment parameters comprising one or more payment alternatives and one or more payment rules; simulating payment transactions for a plurality of combinations of the payment parameters, payment alternatives and payment rules; using the financial parameters for computing a plurality of financial impacts for each simulated payment transaction; and providing payment strategy recommendations based on the computed results.

Further embodiments are described in the appended dependent claims.

According to a second aspect of the present invention, there is provided a system comprising means adapted for carrying out each step of the method according to the first aspect of the invention.

According to a third aspect of the present invention, there is provided a computer program comprising instructions for carrying out the steps of the method when said computer program is executed on a suitable computer device.

According to a fourth aspect of the invention, there is provided a computer readable medium having encoded thereon a computer program comprising instructions for carrying out each step of the method when the computer program is executed on a computer.

Further advantages of the present invention will become clear to the skilled person upon examination of the drawings and detailed description. It is intended that any additional advantages be incorporated therein.

**Brief description of the drawings**

Embodiments of the present invention will now be described by way of example with reference to the accompanying drawings in which like references denote similar elements, and in which:

Figure 1 shows a computing airline environment for operating embodiments of the present invention;
Figure 2 is a flow diagram illustrating a general process for determining a payment strategy in accordance with an embodiment of the present invention;

Figure 3 is a flow chart of the steps performed for defining payment categories and payment alternatives in accordance with an embodiment of the method of the present invention;

Figure 4 is a flow chart of the transactions simulation process in accordance with an embodiment of the method of the present invention;

Figure 5 illustrates the steps for determining payment items of each payment category process in accordance with an embodiment of the method of the present invention;

Figure 6 illustrates the steps of acquiring financial inputs;

Figure 7 is a flow chart of the NPV computation process in accordance with an embodiment of the method of the present invention.

## Detailed description of the invention

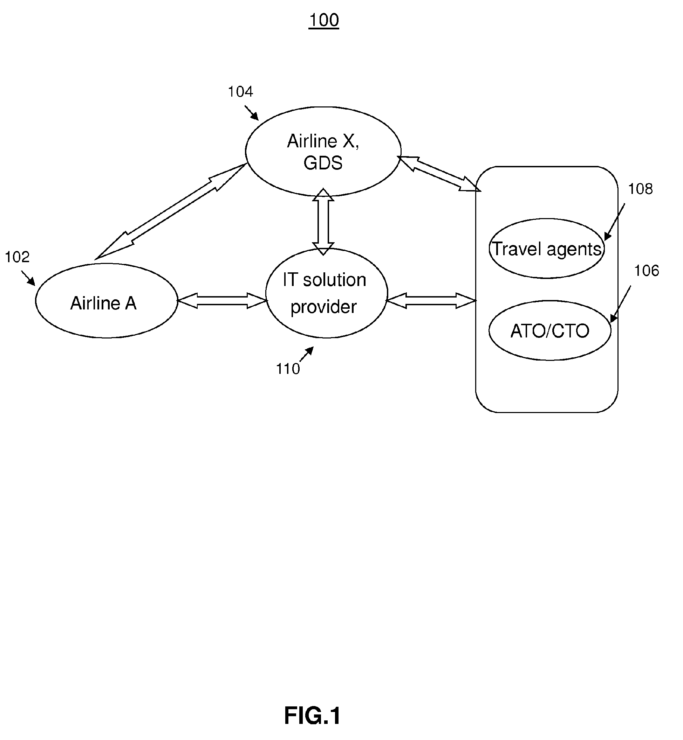

With reference to FIG.1, a computing airline environment 100 taking advantage of the method of the present invention is depicted in accordance with a preferred embodiment. The proposed example in an airline environment is illustrative only and the person skilled in the art would devise an application of the invention in any other environment that would need to determine a payment strategy.

As shown on figure 1, the main actors generally part of an airline environment are:

- The airlines and GDS providers (102, 104) which provide air services;
- The Airport ticket offices (ATO) and City ticket Offices (CTO) (106) which may be offices owned and operated by an airline to sell tickets for their own airline or other airlines;
- The travel agencies (108) which sell airline tickets among other travel products; and
- An airline IT solution provider (110) such as the Amadeus one from the Assignee which provides the network infrastructure to connect airlines, travel agents and ATO/CTO, and which offers among others machines the hardware and software components for a payment platform.

One known airline payment platform is the Amadeus Payment Server (APS) from the Assignee which offers payment transactions management for sales performed across all channels on behalf of an airline merchant.

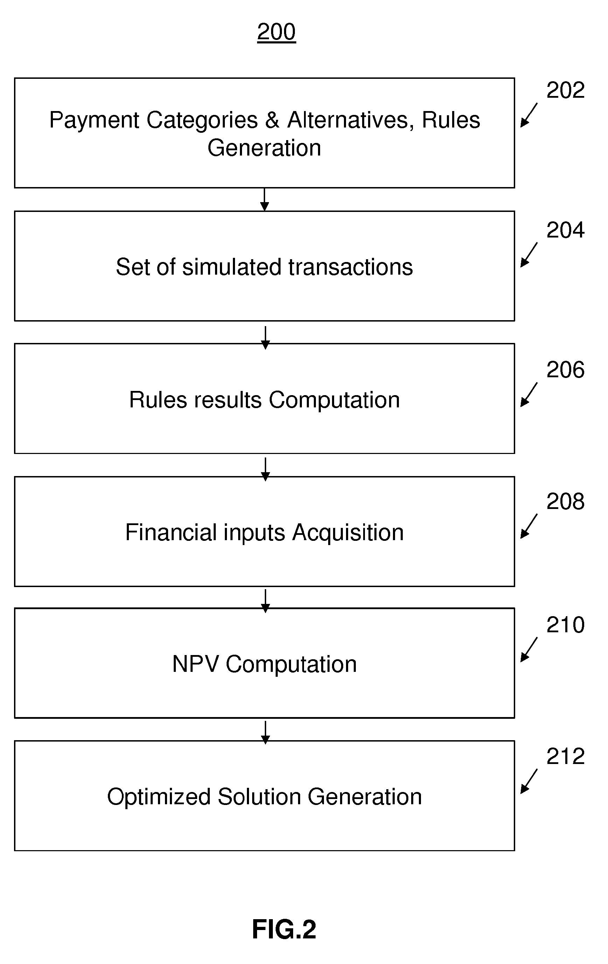

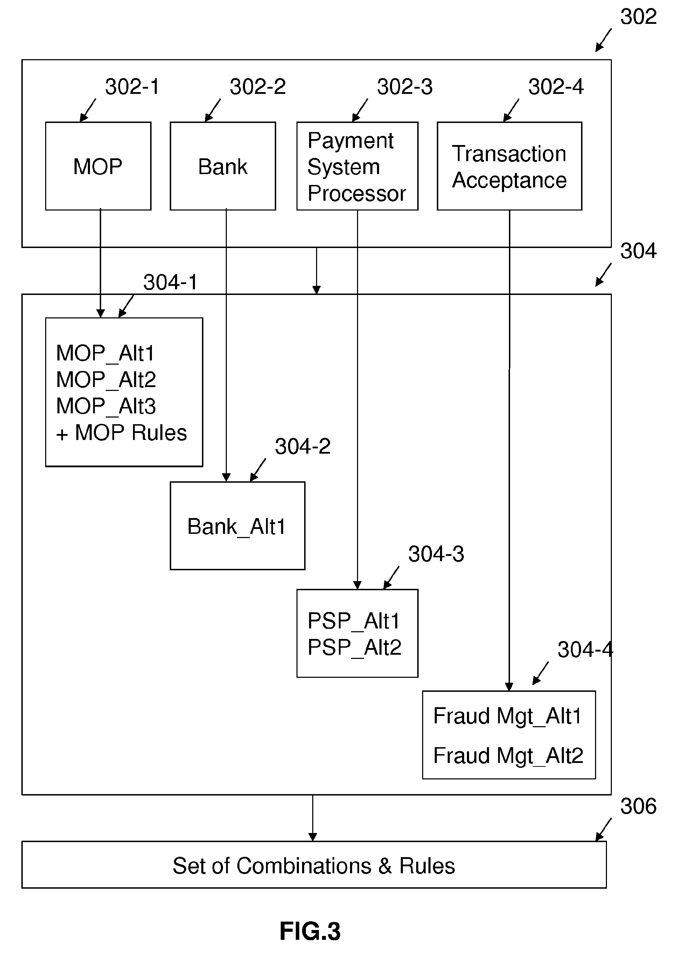

Referring to figure 2, a general process flow 200 of a computer-implemented method for determining a payment strategy is shown in accordance with an embodiment of the present invention. Each step of the general process is further detailed with reference to figures 3 to 8 on an illustrative but non limitative example.

The process begins at step 202 by prompting a user to specify payment parameters to be used for the determination process. For ease of description, the payment parameters may be indifferently named 'payment categories'. For each payment category, the user is prompted to provide payment category alternatives if any, herein named indifferently 'alternative' or 'payment alternative'. As further detailed, each alternative of a category may also include specific payment alternative rules, herein named indifferently 'rules' or 'payment rules'. Then, step 202 allows issuing a set of payment combinations grouping payment categories, alternatives for each payment category with associated payment rules. On next step 204, the payment strategy determination process allows simulating a set of transactions for a specific payment category.

Next, the process enters an iterative routine (step 206). For each payment combination generated on step 202, the process allows computing for each transaction simulated the impact on each payment category of the payment combination.

On a next step (208), the process allows acquiring a plurality of financial parameters to be next used by the process to compute (step 210) the Net Profit Value (NPV) for each payment combination.

On a final step (212) the process allows comparing the plurality of NPVs previously computed to provide a total financial impact of each payment strategy alternative, thereby allowing providing payment strategy recommendations.

Going to figure 3, a more detailed flow diagram of the step for defining the payment categories (302) with their alternatives (304) is now described. As shown in the example by block 302, four payment categories are defined, namely the means of payment MOP (302-1), the bank (302-2), the payment system processor PSP (302-3) and the transaction acceptance (302-4). Each payment category may comprise a plurality of payment items. For example, the MOP payment category may comprise a list of credit cards such as the Visa®, the Mastercard® or the American Express®, plus various on-line money payments such as the PayPal® one to name a few.

The transaction acceptance category allows defining several acceptance items such as accept or reject decisions or obtaining further information before making a final acceptance decision (e.g. manual review, 3-D Secure® authentication).

It is to be appreciated that the payment strategy determination process of the invention may be operated and accessed through a user interface either directly on a general purpose computer or from a remote server over the World Wide Web via a Universal Resource Locator (URL). The user interface may be configured to offer a user the means to enter the payment categories or to select different payment categories from a proposed list or from a mix of selections and voluntary inputs.

As shown by block 304, an alternative registration component allows the creation and registration of a plurality of alternatives for each payment category. Namely, a first block 304-1 illustrates a MOP alternatives sub-component to create the MOP alternatives. The user enters or selects from a proposed list, the items to be included in each alternative. In case the user is already operating with a payment platform, the payment items already used by the payment platform are labeled as 'current context' or 'historical'.

For example, for creating a first MOP alternative (MOP_Alt1) for the MOP category, two items may be selected to define the alternative as follow:

- MOP_Alt1 = Visa + Mastercard,

wherein the Mastercard is tagged as the 'historical' one being the means of payment already used by the user. In a preferred implementation, the user interface may be configured to offer the user a specific delimited area to enter the historical items for each payment category and another area to enter the others alternatives.

Similarly to the historical MOP alternative, three elements may be selected for creating a second alternative (MOP_Alt2) defined as:

- MOP_Alt2 = Visa + Mastercard + Amex

For the purpose of the description, a third alternative may be defined as:

- MOP_Alt3 = Visa + Mastercard + Amex + PayPal

Moreover, the user may provide specific rules (MOP Rules) for each MOP item. For example, one MOP rule may be to restrict the use of the on-line payments with PayPal® to one country or geographic territories, e.g. PayPal® is used only for the US. The specific rules may also be retrieved from a MOP rules database storing predefined and/or historical rules.

Once all alternatives are created with the optional rules, the process allows generating a set of rules (MOP Rules) for the MOP category.

An example of a set of MOP rules may be as follow:

- If country is 'US' then set of MOPs = Visa + Mastercard + Amex + PayPal;
- for any country apart from the 'US' then set of MOPs = Visa + Mastercard + Amex.

It is appreciated that any variant in the rules formulation may be devise from the context of the airline merchant.

Block 304-2 illustrates the Bank alternatives sub-component created for the Bank payment category. As shown in the example only one bank alternative is created (Bank_Alt1) selecting one bank handling all the transactions. For purposes of the example, the bank is the historical one.

Similarly, block 304-3 illustrates the PSP alternatives created for the PSP payment category. In the example, a first PSP alternative is created (PSP_Alt1) to select a first PSP being operatively in communication with the bank selected in the bank alternative. For purposes of the example, the first PSP is the historical one.

A second PSP alternative is created (PSP_Alt2) with a second PSP2 which is not necessarily operatively in communication with the bank selected but that the user wants to be studied by the strategy determination process.

Although not shown on figure 3, it will be understood that the alternative registration component may comprise conventional means for validating the PSPs entered by a user are valid ones to handle all the MOPs previously selected or for informing the user of any incompatibility.

Block 304-4 illustrates the Transaction Acceptance alternatives created for the Transaction Acceptance category. As shown in the example, a first Transaction Acceptance alternative (Fraud Mgt_Alt1) is created for an acceptance based on a fraud screening provider having rules based on transaction data leading to accept, manual review or reject decisions. For purposes of the example, the first Acceptance alternative is the historical one.

A second Transaction Acceptance alternative (Fraud Mgt_Alt2) is created for an acceptance based on the use of a 3-D Secure® authentication.

Then, once all payment alternatives are created and as represented by block 306, the determination process allows generating a set of overall payment alternatives combining alternatives from each of the payment alternative sub-components.

Hence, for the illustrative example, the following alternatives combinations generated are as follow:

- Combination 1 :

  - MOP alternative = MOP_Alt1
  - Bank alternative = Bank_Alt1
  - PSP alternative = PSP_Alt1
  - Acceptance alternative = Fraud Mgt_Alt1

- Combination 2 :

  - MOP alternative = MOP_Alt2
  - Bank alternative = Bank_Alt1
  - PSP alternative = PSP_Alt1
  - Acceptance alternative = Fraud Mgt_Alt1

- Combination 3 :

  - MOP alternative = MOP_Alt3
  - Bank alternative = Bank_Alt1
  - PSP alternative = PSP_Alt2
  - Acceptance alternative = Fraud Mgt_Alt2,

  wherein 'Combination 1' is representing the historical combination of payment alternatives, i.e. the one being in use.

Each combination of alternatives is moreover associated to rules defined for each category.

It is to be appreciated that other combinations may be generated such as for example for a Combination 2b having rules defining that if country is USA, the MOP_Alt2 is applied otherwise, the MOP_Alt1 is applied.

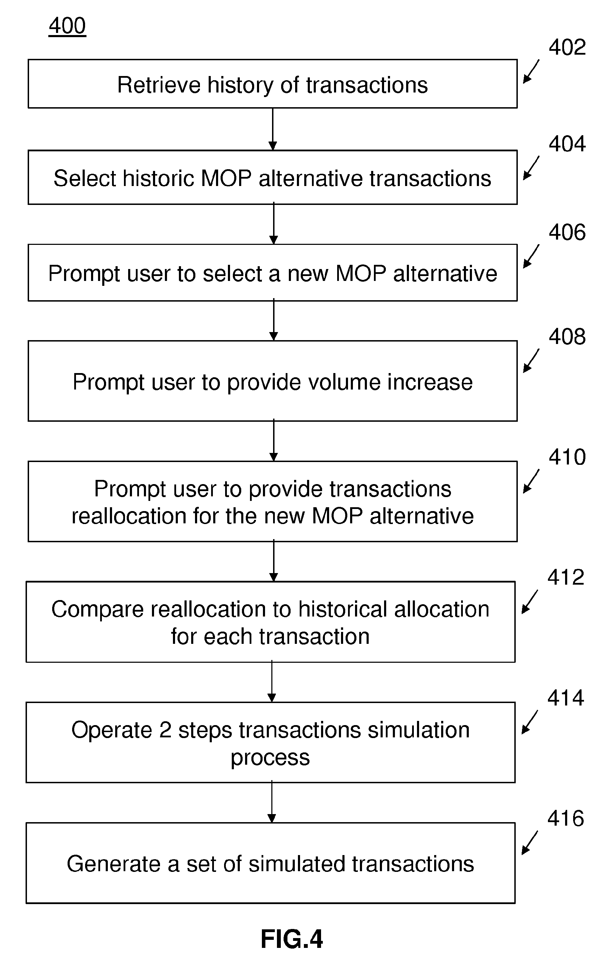

Referring to figure 4, a flow chart 400 of the steps performed for the simulation of a set of transactions (step 204 of figure 2) is now described. For simplicity of the description, the previous use case is also taken as example to detail the process.

On step 402, the process allows retrieving a volume of past transactions to be used as a set of transactions for the simulations. Let's have a volume of past transactions be equal to 100%. The volume of transactions to be taken into consideration may be based on transactions executed over several months and stored in a transaction database.

On a next step 404, the process allows identifying among the past volume of transactions, the volume of historical transactions corresponding to the historical MOP alternative, i.e. MOP_Alt1 = Visa + Mastercard, For the purpose of the example described, the volume of the historical transactions for MOP_Alt1 = Visa + Mastercard is split into 60% for Visa and 40% for Mastercard.

The table below illustrates an example of a volume of historical transactions as displayed on a user interface:

| Historical MOPs | Volume of historical MOP transactions |
|---|---|
| Visa | 60% |
| Mastercard | 40% |
| Total | 100% |

On a next step 406, the user is prompt to select a MOP alternative to be simulated. For the purpose of the example described, the alternative selected is MOP_Alt2 = Visa + Mastercard + Amex.

The user is further prompted on step 408 to define the increase on the volume of transactions obtained by the alternative. In the example, as shown on the table below, the user selects to have +5% of transactions providing a total volume of 105%.

| MOPs | Volume of historical MOP | Volume with new MOP |
|---|---|---|
| Visa | 60% | 60% |
| Mastercard | 40% | 40% |
| Amex | 0% | **5%** |

(continued)

| MOPs | Volume of historical MOP | Volume with new MOP |
|---|---|---|
| Total Volume | 100% | **105%** |

On a next step 410, the user is prompt to reallocate the volume of transactions among the MOP payment items. In the example, as shown on the table below, the user selects to have +10% of transactions for the new MOP item 'Amex', and to reduce the volume for the historical MOP items from 60% to 57% for the Visa and from 40% to 38% for the Mastercard.

| MOPs | Volume of historical MOP | Volume with new MOP |
|---|---|---|
| Visa | 60% | **57%** |
| Mastercard | 40% | **38%** |
| Amex | 0% | **10%** |
| Total | 100% | 105% |

On next step 412, the process allows comparing for each transaction of the past volume of transactions, the historical allocation of transactions (Volume1) to the reallocation (Volume2) defined by the user for the alternative.

On next step 414, the process runs a two-steps simulation routine on all transactions of the set of past transactions.

A first step allows setting a probability for the MOP items depending on the reallocation provided by the user.

For each MOP item having a lower volume in the reallocation, the process allows retaining the historical transaction and putting it in the set of simulated transaction with a probability equal to Volume2/Volume1.

For each MOP item having a higher volume in the reallocation, the process allows retaining the historical transaction and putting it in the set of simulated transaction with a probability equal to Volume2/Volume1-1.

In the above example, for each transaction of the past volume of transactions, the process allows retaining the historical transaction and putting it in the set of simulated transaction with probability of 57%/60% if the transaction is a Visa transaction, and a probability of 38%/40% if the transaction is a Mastercard transaction.

A second step allows selecting the new MOP items that are not historical MOP items, with their associated percentage '$p_i$s'. Then, for each transaction in the past volume of transactions, the process allows using the percentage '$p_i$s' in the simulated set of transactions with a probability equal to the sum 'p' of all percentage. Then, the process allows assigning the new MOP item with a probability equal to '$p_i/p$'.

In the example, the process allows going through all transactions in the historical set again, copying them in the new simulated set of transactions with probability 10%, and change the MOP with probability 10%/10% to Amex.

Finally, on step 416, the process allows providing a set of simulated transactions for the alternative selected.

The tables below illustrate on another example the process of generating a set of simulated transactions, specifically for the MOP alternative defined previously as MOP_Alt3 = Visa + Mastercard + Amex + PayPal, having a rule defined as 'PayPal® is used for the US only'.

As previously described, after retrieving the historical MOP transactions, the user defines by how much the new alternative will increase the total sales volume.

As there is a MOP rule on countries defined for this example, the user defines 5% for non US countries and 10% for the US.

The user is then prompt to modify the historical transaction split to reflect a new transaction split with the new MOP for the different countries or regions.

Table below shows a splitting for countries different from the US:

| MOPs | Volume of historical MOP | Volume with new MOP |
|---|---|---|
| Visa | 65% | 65% |
| Mastercard | 35% | 35% |
| Amex | 0% | **5%** |
| Total | 100% | **105%** |

Table below shows a splitting for the US:

| MOPs | Volume of historical MOP | Volume with new MOP |
|---|---|---|
| Visa | 58% | 58% |
| Mastercard | 42% | 42% |
| Amex | 0% | **5%** |
| PayPal | 0% | **5%** |
| Total | 100% | **110%** |

As previously described, the user is then prompted (410) to reallocate the volume of transactions among the MOP payment items, as shown in each table below for US and non-US countries.

Table below shows a reallocation for the non-US countries:

| MOPs | Volume of historical MOP | Volume with new MOP |
|---|---|---|
| Visa | 65% | **63%** |
| Mastercard | 35% | **34%** |
| Amex | 0% | **8%** |
| Total | 100% | **105%** |

Table below shows a reallocation for the US:

| MOPs | Volume of historical MOP | Volume with new MOP |
|---|---|---|
| Visa | 58% | **52%** |
| Mastercard | 42% | **38%** |
| Amex | 0% | **12%** |
| PayPal | 0% | **8%** |
| Total | 100% | **110%** |

As previously described for steps 412 and 414, the process allows running simulations for all transactions of the set of past transactions with the inputs defined by the user, and by using first in each transaction probabilities depending of the user's inputs for the existing MOP items, and by using secondly other probabilities for the new MOP items.

In the example, the process allows simulating all transactions of the past set of transactions with probabilities of:

- 63%/65% if the transaction is a Visa transaction and 34%/35% if the transaction is a Mastercard transaction, not in the US;

- 52%/58% if the transaction is a Visa transaction and 38%/42% if the transaction is a Mastercard transaction, in the US; and then allows using the historical transactions in the new simulated set of transactions with a probability of:

  - 8% with the probability for Amex equal to 8%/8% not in the US;

  - 20% (12% of Amex and 8% of Paypal) with the probability for Amex equal to 12%/20% and equal to 8%/20% for Paypal, for transactions in the US.

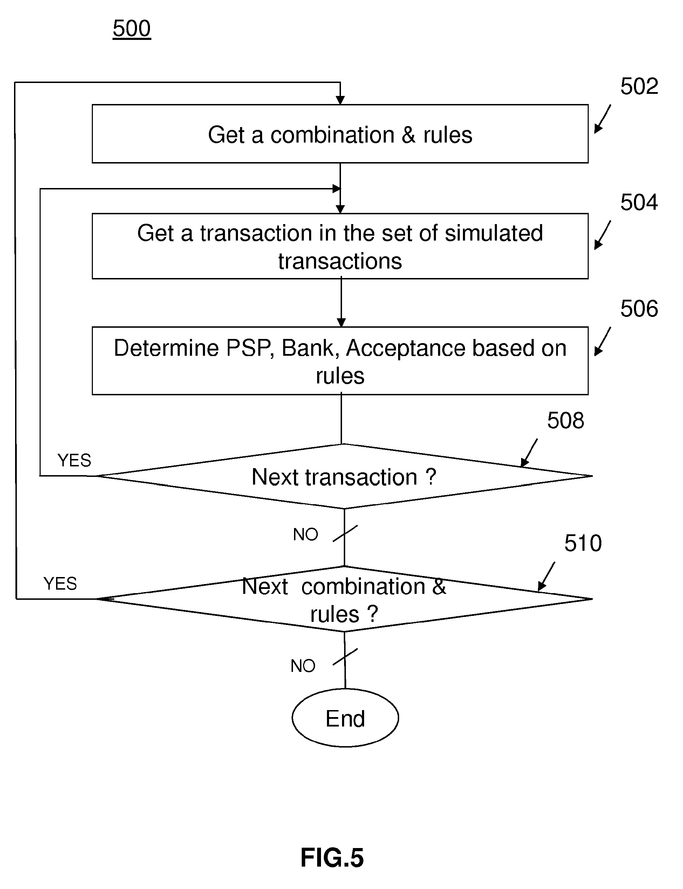

Going now to figure 5, the steps (500) executed for determining payment items of each payment category for each transaction of the set of simulated transactions are described. The process is operated for transaction per transaction within the set of simulated transactions for each combination of the overall payment alternatives previously obtained from step 306.

On a first step 502, the process allows selecting a first combination of payment alternatives and associated rules, and on step 504, the process allows selecting a first transaction in the set of simulated transactions obtained previously from step 416.

On next step 506, the process allows running the first transaction for the first selected combination and determining a Payment System Processor, a Bank and an Acceptance strategy.

On next step 508, the process allows selecting a next transaction (branch Yes) or going to next step 510 to determine if all combinations have been simulated. When all combinations have been simulated for the all set of simulated transactions, the process ends.

For Combinations 1 and 2, all historical transactions are linked to Bank_Alt1 and PSP_Alt1. Then, depending on the rules in FraudMgt_Alt1, it is determined for each transaction whether it should be accepted, rejected or denied,

For Combination 3, all historical transactions are linked to Bank_Alt1 and PSP_Alt2. The FraudMgt_Alt2 applies, which means the acceptance decision will be 3D-secure.

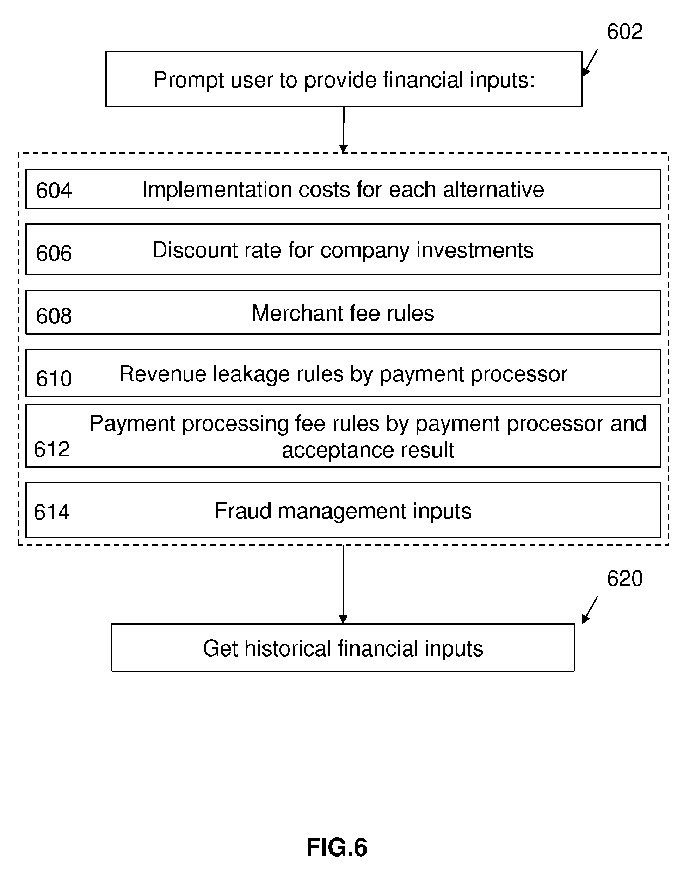

Reference is now made to figure 6 which illustrates the set of financial parameters to be provided by the user to continue the determination process. After the previous step 206 of computing the impact on each payment category of the payment combination, the user is prompt (602) to define a plurality of financial parameters to be further used by the computing process.

As shown by boxes 604 to 614, the following parameters are to be defined:

- 604: the implementation costs for each payment combination. In the previous example, such costs could be defined by the user as follow :
- for combination defined by ALT1 = 0 € as it is the historical combination;
- for combination defined by ALT2 = 0 € as the PSP is the same;
- for combination defined by ALT3 = 100,000 € as it would be a new PSP with an implementation of a communication to the bank.

It is to be appreciated by the person skilled in the art that the values herein defined are just for exemplifying the process and are not to be taken as fixed values, as well as for the currency which can be defined in different currencies such as dollars for example.

- 606: the discount rate for company investments: e.g. 15%
- 608: the merchant fee rules based on bank and transaction information. For the proposed example, the fee rules could be defined as follow:

    - for Visa or Mastercard transaction = 0.6%
    - for Visa or Mastercard transaction with 3DS = 0.3%
    - for Amex transaction = 2%
    - for PayPal transaction = 3%

- 610: the revenue leakage rules by payment processor. For the proposed example, the revenue leakage rules could be defined as follow:

    - for PSP1 = 0.3%
    - for PSP2 = 0%
    - 612: the payment processing fee rules. For the proposed example, the payment processing fee rules could be defined as follow:

- for PSP1 = 6c per transaction

    - for PSP2 = 5c per transaction

- 614: the fraud management inputs, which are composed of:

    - a fraud probability of a rejected transaction, e.g.

        ■ for Alternative 1 = 20%
        ■ for Alternative 2 = 5%

    - a chargeback penalty, e.g. 20€ per chargeback
    - a cost of processing one chargeback, e.g. 5€

- a cost of performing one manual review, e.g. 3€
- a gross margin, e.g. 20% for all products for simplicity of the example
- an abandonment rate , e.g. 50%
- a false positives of manual review process, e.g. 20% with a false negatives of manual review process, e.g. 20%
- a false positive of 3DS process, e.g. 2% with a false negative of manual review process, e.g. 20% for all countries for simplicity of the example.

After inputting all the requested financial parameters, the process allows on step 620 retrieving a plurality of historical financial inputs. The historical financial inputs may be retrieved either through a total cost of merchant fees, revenue leakage and payment processing fees, and total cost of fraud or with merchant fees, revenue leakage, payment processing fees and total cost of fraud inputs.

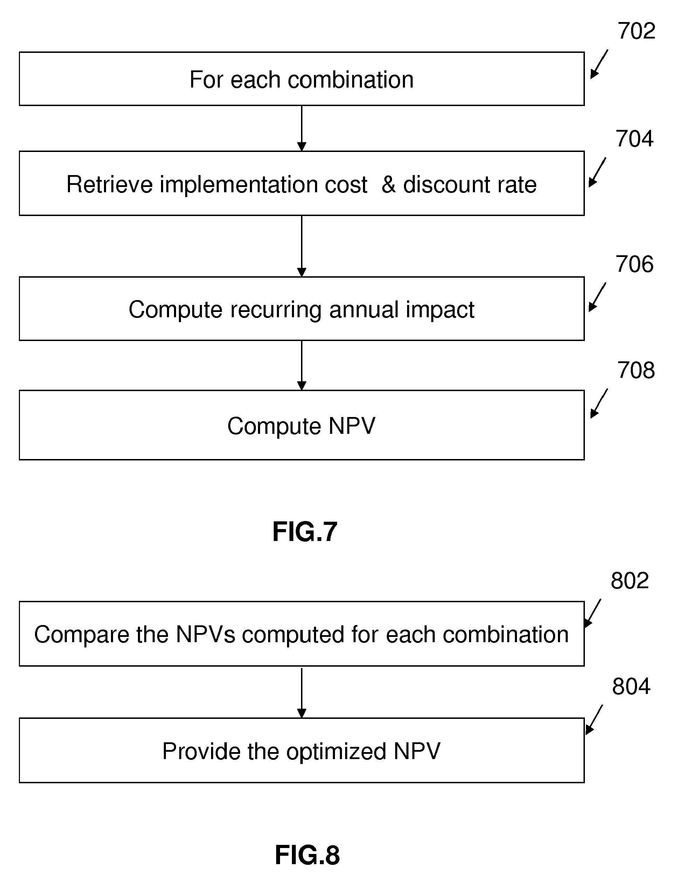

Figure 7 details the steps for computing the Net Profit Value (NPV) for each payment combination on the basis of the financial inputs previously collected. The process begins at step 702 by selecting a first payment combination and next on step 704 by retrieving the implementation cost 'imp_cost' and the discount rate 'd' previously defined at steps 604 and 606. On a next step 706 the process allows computing a recurring annual impact. A recurring annual incremental impact 'an_imp' is computed by summing the annual impact for each new alternative and subtracting the historical alternative annual impact. The computation of the recurring annual impact consists mainly in computing the cost differences for the various financial parameters previously defined: merchant fee, payment processing fee, revenue leakage, fraud cost.

On a next step 708, the process allows computing a NPV for the currently selected payment combination, and then going back to the beginning to select a next payment combination. NPV computation is exemplified below for the two payment combinations used in the example.

For the combination based on MOP_Alt2, the impact on the annual gross margin is computed by summing the amount of the whole set of simulated transactions, comparing it to the amount of the historical transactions, and getting the gross margin. To simplify the description for the example, let's have an amount of the initial sales with the historical alternative of the merchant be equal to 200MEUR, with a 20/80 split between the US and the rest of the world. For alternative 2, 5% is gained in terms of annual volume worldwide, so there is an incremental of 10MEUR of sales, so an incremental of 2MEUR gross margin.

The impact is also computed for the merchant fee for each transaction. The cumulated historical and the cumulated new merchant fee amounts are calculated over all transactions in the historical and the new sets of transactions, and then subtracted. To simplify the description for the example, let's have a historical merchant fee of 0.6% (fee for Visa or Mastercard transaction without 3DS) to be applied over the 200MEUR sales. This gives a 1.2MEUR in total historical merchant fees. Let's have a new merchant fee of 0.6% for Visa and Mastercard transactions with a ratio of 95%/105% of new amounts and of 2% for Amex transactions with a ratio of 5%/105% of new amounts. By assumption, the Amex transactions have the same average amount than the Visa and Mastercard transactions. The total new merchant fee is then computed as shown below:

$$210M*0.6\%*95\%/105\%+210M*2\%*5\%/105\%=1.34MEUR$$

Therefore the annual difference in merchant fees is equal to -0.14MEUR.

The impact is also computed for the payment processing fee. Similarly, the cumulated historical and cumulated new payment processing fees may be calculated over all transactions in the historical and the new sets of transactions, and then subtracted. To simplify the description for the example, let's have an amount of average transaction equal to 200EUR, and the historical set of transactions containing 1 M transactions and the new one 1.05M. The historical cumulated payment processing fees is therefore equal to 1 M*0.05=0.05M and the cumulated new payment processing is equal to 1.05M*0.05=0.0525M. Therefore the annual difference in payment processing fees is equal to 0.0025MEUR.

The impact is also computed for the revenue leakage. Similarly, the cumulated historical and cumulated new revenue leakage may be calculated over all transactions in the historical and the new sets of transactions, and then subtracted. To simplify the description for the example, it is known the average revenue is 0.3%. So the historical revenue leakage is equal to 200M*0.3%=0.6MEUR and the new revenue leakage is equal to 210M*0.3%=0.63MEUR. Therefore, the annual difference in revenue leakage is equal to -0.03MEUR.

Finally, the impact is also computed for the total cost of fraud. Similarly, the cumulated historical and cumulated new total cost may be calculated over all transactions in the historical and the new sets of transactions, and then subtracted. To simplify the description for the example, let's have a total cost of fraud of about 2% as the same fraud management strategy is used for Alternatives 1 and 2. So the historical total cost of fraud is equal to 200M*2%=4MEUR and the new total cost of fraud is equal to 210M*2%=4.2MEUR. Therefore, the annual difference in total cost is equal to -0.2MEUR.

Then, the annual incremental impact 'an_imp' is computed and is equal to: 2- 0.14 - 0.0025 - 0.03 - 0.2 = 1.63 millions of Euros.

The final step of the process allows computing the NPV. To simplify the description for the example, the NPV is computed over five years as follow:

$$NPV\ (5\ years) =\ an\_imp/d*(1-\ 1/(1+d)^5) -\ imp\_cost$$

As there is no implementation costs for this alternative, the NPV is then equal to:

$$1.63/15\%*(1-1/115\%^5) = 5.46MEUR$$

Similarly, the previous computations of impacts may be realized for the example based on the second alternative, and would lead to the following results:

- for the annual gross margin : outside the US, a 3, 5% is gained in terms of annual volume, so there is an incremental in sales of 200MEUR*80%*5% = 8MEUR. For the US, a 10% is gained in terms of annual volume, so there is an incremental of sales of 200MEUR*20%*10% = 4MEUR. Thus, there is a worldwide incremental of sales of 12MEUR and an incremental gross margin of 2.4MEUR.

- for the merchant fee: the new merchant fee is 0.6% for Visa and Mastercard transactions with ratios of 90%/110% of US amounts and 97%/105% of non US amounts, and is 2% for Amex transactions with ratios of 12%/110% of US amounts and 10%/105% of non US amounts, and is 3% for PayPal transactions with ratio of 8%/110% of US amounts. The total new merchant fee is computed as shown below:

    210M*(0.3%*(20%*90%/110%+80%*97%/105%)+2%*(20%*12%/110 %+80%*10%/105%)+3%*(20*8%/100%)) = 1.08MEUR. Therefore the annual difference in merchant fees is equal to 1.2-1.08 = 0.12MEUR.

- for the payment processing fee : the cumulated payment processing fee is 212M/200*0.06 = 0.0636M. Therefore, the annual difference in payment processing fees is equal to 0.05-0.0636 = -0.0136MEUR.

- for the revenue leakage : the revenue leakage with the new PSP is 0%. Therefore, the annual difference in revenue leakage is equal to 0.6MEUR.

- for the total cost of fraud: it is assumed that the total cost of fraud is about 3% for a 3DS strategy as there are different fraud management strategies used. The new total cost of fraud would be equal to 212M*3% = 6.36MEUR. Therefore, the annual difference in total cost of fraud is equal to -2.36MEUR.

Finally, the annual incremental impact 'an_impact' is equal to: 2.4 + 0.12 - 0.0136 + 0.6 - 2.36 = 0.75 millions of Euros.

As there are 100K€ of implementation costs for deploying the solution of this alternative, the 5-years NPV is computed as being equal to: +0.75/15%*(1-1/115%^5) = 2.6 MEUR

Figure 8 shows the last steps processed for determining a payment strategy, once all NPVs have been computed in previous step 708 of figure 7. The process allows on step 802 comparing the value of each NPV computed for each payment combination and providing on next step 804, the payment combination corresponding to the optimized NPV. More precisely, if all payment combinations have a negative NPV, then the process allows proposing the historical payment combination as being the optimized one. If some payment combinations have a positive NPV, the process allows providing the combination having the highest NPV has being the optimized one.

For the previous example, the process would generate as the result that the payment combination based on Alternative 2 is the optimized one with a NPV of 5.46MEUR compared to the NPV of 2.6MEUR of the other alternative (ALT3), even if the sales increase is not as much as for Alternative 3, but Alternative 3 is deserved as it creates more merchant fees and total cost of fraud.

Finally, it is to be appreciated that the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

**Claims**

1. A computer-implemented method of handling a payment strategy for a payment platform comprising the steps of:

   receiving a plurality of financial parameters and payment parameters, the payment parameters comprising one or more payment alternatives and one or more payment rules;
   simulating payment transactions for a plurality of combinations of the payment parameters, payment alternatives and payment rules;
   using the financial parameters for computing a plurality of financial impacts for each simulated payment transactions; and
   providing payment strategy recommendations based on the computing results.

2. The method of claim 1 wherein the step of computing a plurality of financial impacts comprises computing a Net Profit Value for each simulated payment transactions.

3. The method of claim 2 further comprising the steps of computing a total financial impact by comparing the plurality of computed Net Profit Values.

4. The method of claim 3 wherein the step of providing payment strategy recommendations further comprises the steps of displaying the highest Net Profit Value and one or more of associated data comprising one or more financial parameters, impact on payment category, total financial impact.

5. The method of any preceding claim, wherein a payment parameter is a means of payment or a bank name or a payment system processor or a transaction acceptance strategy.

6. The method of claim 5, wherein a transaction acceptance strategy is an acceptance decision, a rejection decision or is provided by a fraud management system comprising a manual review mode or an "independent-channel secure authentication validation" mode.

7. The method of any preceding claim, wherein a set of historical transactions is used for the simulation step corresponding to transactions executed for one combination of payment parameters, payment alternatives and payment rules.

8. The method of claim 7 wherein the set of historical transactions is extracted from a set of past transactions.

9. The method of any preceding claim, wherein the payment rules comprise payment restrictions by geographic territories.

10. The method of any preceding claim, wherein a financial parameter is associated with at least one or more of a choice of currency, a discount rate for a company investment, a merchant fee rule based on bank and transaction information, a revenue leakage rule by payment processor, a payment processing fee rules, a fraud management input, a fraud probability, a chargeback penalty, a cost of processing one chargeback, a cost of performing one manual review, a gross margin, an abandonment rate , a false positive of a manual review process, or a false positive of an "independent-channel secure authentication validation" mode.

11. The method of any preceding claim, wherein a financial impact is associated with at least one or more of an impact on the annual gross margin, an impact for the merchant fee, an impact for the payment processing fee, an impact on revenue leakage, an impact for the total cost of fraud.

12. A computer program comprising instructions for carrying out the steps of the method according to any one of claim 1 to 11 when said computer program is executed on a suitable computer device.

13. A computer readable medium having encoded thereon a computer program according to claim 12.

14. A system comprising means adapted to carry out each step of the method according to any one of claims 1 to 11.

15. Use of the system of claim 14 for determining a payment strategy for an airline platform.

<u>100</u>

FIG.1

200

Payment Categories & Alternatives, Rules
Generation

202

Set of simulated transactions

204

Rules results Computation

206

Financial inputs Acquisition

208

NPV Computation

210

Optimized Solution Generation

212

FIG.2

302

302-1    302-2    302-3    302-4

| MOP | Bank | Payment System Processor | Transaction Acceptance |

304

304-1

MOP_Alt1
MOP_Alt2
MOP_Alt3
+ MOP Rules

304-2

Bank_Alt1

304-3

PSP_Alt1
PSP_Alt2

304-4

Fraud Mgt_Alt1

Fraud Mgt_Alt2

306

Set of Combinations & Rules

**FIG.3**

400

| | |
|---|---|
| Retrieve history of transactions | 402 |
| Select historic MOP alternative transactions | 404 |
| Prompt user to select a new MOP alternative | 406 |
| Prompt user to provide volume increase | 408 |
| Prompt user to provide transactions reallocation for the new MOP alternative | 410 |
| Compare reallocation to historical allocation for each transaction | 412 |
| Operate 2 steps transactions simulation process | 414 |
| Generate a set of simulated transactions | 416 |

FIG.4

<u>500</u>

```
                                                          502
        ┌──────────────────────────────────────┐  ↙
        │      Get a combination & rules        │
        └──────────────────────────────────────┘

                                                          504
        ┌──────────────────────────────────────┐  ↙
        │  Get a transaction in the set of      │
        │          simulated transactions       │
        └──────────────────────────────────────┘

                                                          506
        ┌──────────────────────────────────────┐  ↙
        │  Determine PSP, Bank, Acceptance      │
        │            based on rules             │
        └──────────────────────────────────────┘

                                                      508
   YES                                            ↙
        ◇────────  Next transaction ?  ────────◇

                        NO

                                                      510
   YES                                            ↙
        ◇──────  Next combination &  ─────────◇
                       rules ?

                        NO

                   ⟨  End  ⟩
```

**FIG.5**

602

Prompt user to provide financial inputs:

| 604 | Implementation costs for each alternative |
| 606 | Discount rate for company investments |
| 608 | Merchant fee rules |
| 610 | Revenue leakage rules by payment processor |
| 612 | Payment processing fee rules by payment processor and acceptance result |
| 614 | Fraud management inputs |

620

Get historical financial inputs

**FIG.6**

702

```
For each combination
```

704

```
Retrieve implementation cost  & discount rate
```

706

```
Compute recurring annual impact
```

708

```
Compute NPV
```

**FIG.7**

802

```
Compare the NPVs computed for each combination
```

804

```
Provide the optimized NPV
```

**FIG.8**

Europäisches
Patentamt

European
Patent Office

Office européen
des brevets

# EUROPEAN SEARCH REPORT

**Application Number**

EP 14 15 3720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/06<br>G06Q50/14 |

**TECHNICAL FIELDS SEARCHED (IPC)**

G06Q

The present search report has been drawn up for all claims

| Place of search | Date of completion of the search | Examiner |
|---|---|---|
| Munich | 6 June 2014 | González, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)